# EUROPÄISCHE PATENTSCHRIFT

(11) **EP 3 472 460 B1**
(45) Veröffentlichungstag und Bekanntmachung des Hinweises auf die Patenterteilung: **30.12.2020**
(21) Anmeldenummer: 17734012.2
(22) Anmeldetag: 19.06.2017
(51) Int. Cl.: F03D 80/10

(54) **WINDPARKFLUGBEFEUERUNGSSYSTEM SOWIE WINDPARK DAMIT UND VERFAHREN ZUR BEFEUERUNG EINES WINDPARKS**
AIRCRAFT WARNING LIGHTING FOR WINDPARK AND METHOD OF PROVIDING WARNING LIGHTNING FOR A WINDPARK
BALISAGE DE PROTECTION AÉRONAUTIQUE DE PARC DE VENT AINSI QUE MÉTHODE DE FOURNIR UN PARC DE VENT AVEC CELA

(30) Priorität: 20.06.2016 DE 102016111222
(43) Veröffentlichungstag der Anmeldung: 24.04.2019
(73) Patentinhaber: Wobben Properties GmbH, 26607 Aurich (DE)
(72) Erfinder: HARMS, Stephan, 26529 Upgant-Schott (DE); GIERTZ, Helge, 26789 Leer (DE)
(74) Vertreter: Eisenführ Speiser
(86) Internationale Anmeldenummer: PCT/EP2017/064943
(87) Internationale Veröffentlichungsnummer: WO 2017/220496

(56) Entgegenhaltungen:
- WO-A1-2013/075959
- US-A1- 2014 313 345
- US-A1- 2016 053 744

## Beschreibung

Die Erfindung betrifft ein Windparkflugbefeuerungssystem, also ein System zur Flugbehinderungsbefeuerung für einen Windpark, sowie einen Windpark mit einem derartigen Windparkflugbefeuerungssystem. Ferner betrifft die Erfindung ein Verfahren zur Befeuerung eines Windparks.

Gemäß dem Stand der Technik sind Systeme zur Flugbehinderungsbefeuerung, im Folgenden auch kurz Systeme zur Flugbefeuerung oder Flugbefeuerungssysteme genannt, bekannt, die zur Befeuerung der Windenergieanlagen eines Windparks eingesetzt werden.

Die Flugbefeuerung umfasst eine oder mehrere Leuchten, die an den Windenergieanlagen angeordnet sind und dienen, um Flugobjekte auf sich im Bereich der Flugbahn befindende Windenergieanlagen bei schlechter Sicht oder nächtlicher Dunkelheit aufmerksam zu machen.

Es ist eine Vielzahl von unterschiedlichen Flugbefeuerungssystemen für Windparks bekannt. Gemäß einem ersten System wird z. B. eine Steuerung der Leuchten der Flugbefeuerungssysteme so vorgenommen, dass diese tagsüber abgeschaltet werden, um Energie zu sparen. Eine tageszeitabhängige Steuerung der Flugbefeuerung bringt jedoch das Problem mit sich, dass auch tagsüber schlechte Sicht herrschen kann, bei der das Einschalten der Flugbefeuerung nötig ist. Auch ein durchgängiges Befeuern der Windenergieanlagen in der Nacht ist störend für Anwohner im Bereich der Windenergieanlagen.

Daher wurden bereits weitergehende Vorschläge gemacht, um die Flugbefeuerung im Bedarfsfall einzuschalten. Ein derartiger Bedarfsfall tritt ein, wenn sich ein Flugobjekt in den Bereich einer Windenergieanlage oder eines Windparks nähert. Eine derartige bedarfsgerechte Flugbefeuerung wird beispielsweise in WO 2013/075959 A1 beschrieben.

Das Annähern der Flugobjekte wird gemäß diesen bekannten Flugbefeuerungssystemen beispielsweise mittels passiver Sekundärradare erkannt, die ein Transpondersignal eines Flugobjekts detektieren und in Abhängigkeit der Detektion die Leuchten ein- oder abschalten. Diese Systeme sind jedoch abhängig von externen Signalen, wie hier dem Transpondersignal des Flugobjekts.

Ferner sind auch unabhängige Systeme bekannt, bei denen mehrere Aktivradare an jeder Windenergieanlage eines Windparks vorgesehen sind, so dass auf ein Transpondersignal der Flugobjekte verzichtet werden kann. Aktivradrare sind jedoch sehr teuer.

Aufgrund des hohen Preises von aktiven Radaren wurden weitere alternative Systeme vorgeschlagen, die beispielsweise Mikrofonarrays vorsehen, um Flugobjekte durch Ihre ausgestrahlten Geräusche zu detektieren und somit in Abhängigkeit der Detektion der Geräusche die Leuchten ein- oder abzuschalten.

Obwohl bereits diverse Lösungen für Windparkflugbefeuerungssysteme bekannt sind, sind diese entweder sehr teuer in der Umsetzung oder Fehlfunktionen sind nicht zur Gänze ausgeschlossen. Beispielsweise können beim Passivradarsystem Sendeeinheiten der Flugobjekte zum Senden des Transpondersignals ausfallen.

Aufgabe der Erfindung ist es daher, eine Alternative zu den bereits bekannten Systemen zu finden, durch die einerseits Fehlfunktionen, z. B. durch ausfallende Transpondersignale, minimiert werden und andererseits ein günstiges und zuverlässiges Windparkflugbefeuerungssystem zur Verfügung gestellt wird.

Das Deutsche Patent- und Markenamt hat in der Prioritätsanmeldung zu vorliegender Anmeldung den folgenden Stand der Technik recherchiert: US 2016/0053744 A1, US 2014/0313345 A1 und US 2011/0043630 A1.

Erfindungsgemäß wird daher ein Windparkflugbefeuerungssystem, also ein System zur Flugbehinderungsbefeuerung der Windenergieanlagen eines Windparks, vorgeschlagen. Das Windparkflugbefeuerungssystem umfasst mehrere Flugbefeuerungseinrichtungen, die insbesondere Leuchten umfassen. Ferner umfasst das Windparkflugbefeuerungssystem mindestens eine Kamera zum Aufnehmen von Bildern. Die Kamera ist beispielsweise eingerichtet, Bilder oder Videos aufzunehmen.

Außerdem weist das Windparkflugbefeuerungssystem eine Auswerteeinrichtung auf, mittels derer die Positionen von Flugobjekten, also Flugobjektpositionen, detektierbar sind. Die Auswerteeinrichtung detektiert die Flugobjektpositionen durch Auswertung der Kameradaten, insbesondere der mit der Kamera aufgenommenen Bilder. Mittels mindestens einer Schalteinrichtung wird zumindest eine der Flugbefeuerungseinrichtungen in Abhängigkeit der mit der Auswerteeinrichtung detektierten Flugobjektpositionen ein- oder ausgeschaltet.

Daher ist der Einsatz von Radar- oder Transpondersystemen, die sehr teuer sind, unnötig. Die erfindungsgemäße Lösung stellt außerdem eine zuverlässige Alternative dar. Ein Ausfall der Kamera würde - im Gegensatz zu einem ausfallenden Flugtransponder - sofort bemerkt werden. Auf den Fehlerfall einer ausfallenden Kamera kann demnach sofort reagiert werden, indem z. B. die Flugbefeuerungseinrichtungen dauernd eingeschaltet werden.

In der Auswerteeinrichtung werden die Flugbahnen von Flugobjekten gemäß einer Ausführungsform mittels einer Bildverarbeitungssoftware auf Grundlage der Kameradaten, also der aufgenommenen Bilder, erkannt. Die Flugobjekte können beispielsweise genau verfolgt werden. Daher ist es auch möglich, dass die in den Bereich des Windparks eintretenden und aus diesem Bereich heraustretenden Objekte nicht nur genau verfolgt, sondern beispielsweise sogar gezählt werden. Durch Vergleich der Anzahl der eintretenden und heraustretenden Objekte ist daher immer bekannt, ob zur Zeit Objekte, also Flugobjekte, im Bereich der Windenergieanlage vorhanden sind, die das Einschalten der Flugbefeuerungseinrichtungen erfordern.

Außerdem ist es gemäß einer bevorzugten Ausführungsform sogar möglich, im Falle, dass eine Flugbahn nicht wieder aus dem Bereich des Windparks herausführt - was z. B. der Fall beim Landen eines Rettungshubschraubers sein kann - die Flugbefeuerungseinrichtungen solange eingeschaltet bleiben, bis diese wieder aus dem Bereich des Windparks heraustritt. Gemäß einer weiteren Ausführungsform bleibt die Flugbefeuerung jedoch nur für einen vordefinierten Zeitraum von z. B. einem Tag eingeschaltet, da auch der Fall vorstellbar ist, dass ein Flugobjekt im Bereich des Windparks landet und dann auf dem Boden abtransportiert wird, sodass die Flugbahn nie aus dem Bereich des Windparks heraustreten kann.

Gemäß einer weiteren Ausführungsform weist die Kamera ein Objektiv auf. Das Objektiv der Kamera und die Auswerteeinrichtung sind derart aufeinander abgestimmt, um Flugobjekte, insbesondere unabhängig von deren Größe, die innerhalb eines vordefinierten ersten Abstands zur Kamera positioniert sind, zu erkennen und/oder Flugobjekte, die außerhalb eines vordefinierten zweiten Abstands liegen, nicht zu erkennen.

Demnach werden also ein erster und ein zweiter Abstand festgelegt und das Objektiv und die Auswerteeinrichtung derart aufeinander abgestimmt, was etwa durch eine Auslegung einer Software der Auswerteeinrichtung erfolgen kann, dass alle interessierenden Flugobjekte, die näher an der Kamera sind, als es durch den ersten Abstand definiert ist, erkannt werden. Demnach wird zwar etwa ein kleines Flugzeug erst in einem geringeren Abstand zur Kamera detektiert als ein größeres Flugobjekt, wobei jedoch große wie auch kleine Flugobjekte aufgrund der Auslegung oder Abstimmung des Objektivs und der Auswerteeinrichtung jedenfalls dann erkannt werden, wenn diese einen ersten Abstand zur Kamera unterschreiten.

Alternativ oder zusätzlich werden alle interessierenden Flugobjekte, die weiter entfernt von der Kamera liegen, als es durch den zweiten Abstand definiert ist, nicht erkannt. Demnach werden große wie auch kleine Flugobjekte aufgrund der Auslegung oder Abstimmung des Objektivs und der Auswerteeinrichtung jedenfalls dann gerade nicht erkannt, wenn diese einen zweiten Abstand zur Kamera überschreiten.

Gemäß einer weiteren Ausführungsform ist mindestens eine Kamera eine Infrarotkamera. Eine Infrarotkamera, die auch Wärmebildkamera genannt wird, ist ein bildgebendes Gerät ähnlich einer herkömmlichen Kamera, das jedoch Infrarotstrahlung empfängt. Die Infrarotstrahlung liegt im Wellenlängenbereich von ca. 0,7 µm bis 1000 µm. Daher ist der Einsatz einer derartigen Kamera auch bei nächtlicher Dunkelheit zum Detektieren von Flugobjekten möglich. Die Kamera ist vorzugsweise horizontal und/oder vertikal schwenkbar und/oder drehbar, sodass der gesamte Luftraum um eine Windenergieanlage oder einen Windpark herum mit einer einzigen Kamera überwachbar ist.

Gemäß einer weiteren Ausführungsform ist mindestens eine Kamera eine Foto- und/oder Videokamera. Eine Foto- und/oder Videokamera ermöglicht den Einsatz auch zum Schalten einer Flugbefeuerung bei Tag. Die Kamera ist vorzugsweise horizontal und/oder vertikal schwenkbar und/oder drehbar, sodass der gesamte Luftraum um eine Windenergieanlage oder einen Windpark herum mit einer einzigen Kamera überwachbar ist.

Gemäß einer weiteren Ausführungsform ist die Kamera eine stereoskopische Kamera oder eine nach einem Stereoskopieverfahren arbeitende Kamera. Alternativ oder zusätzlich weist das Windparkflugbefeuerungssystem mindesten zwei Kameras auf. Vorteilhafterweise ist somit auch der Abstand zu detektierten Flugobjekten auf einfache Weise möglich. Zwar ist auch der Abstand mit nur einer Kamera detektierbar, indem Beispielsweise eine Kantenkontrastmessung, wie sie aus dem Bereich des passiven Autofokus bekannt ist, durchgeführt wird. Allerdings erfolgt eine Abstandsdetektion mit zwei Kameras schneller und genauer.

Demnach wird also zunächst beispielsweise mit einer Bildverarbeitungssoftware in der Auswerteeinrichtung ein Objekt anhand der Kameradaten, also insbesondere in den mit der Kamera aufgenommenen Bildern, detektiert. Daraufhin werden der Abstand und/oder die Höhe des detektierten Objekts, also dessen Position bestimmt. Anhand der bestimmten Position wird dann mit der Auswerteeinrichtung entschieden, ob eine oder mehrere Flugbefeuerungseinrichtungen ein- oder ausgeschaltet werden müssen.

Gemäß einer weiteren Ausführungsform umfasst das Windparkflugbefeuerungssystem mindestens drei Kameras. Ferner sind die Kameras beabstandet zueinander anordenbar. Hierdurch ist es möglich trotz einer Behinderung im Bildbereich z. B. einer der Kameras, die beispielsweise durch Rotorblätter einer anderen Windenergieanlage auftreten können, entgegenzuwirken.

Alternativ sind die Kameras im Wesentlichen an der selben Position anordenbar, sodass auf eine Schwenkbarkeit oder Drehbarkeit der Kamera verzichtet werden kann, wobei trotzdem ein 360 Grad Rundumbereich überwachbar ist. Auf bewegliche Teile, die Wartungsarbeiten erfordern, kann somit verzichtet werden.

Gemäß einer weiteren Ausführungsform umfasst das Windparkflugbefeuerungssystem mindestens eine Abstandsmessvorrichtung, insbesondere mit einer Laufzeitmessung, wie einer Sonareinrichtung, Laserentfernungsmessvorrichtung oder Laserabstandsmessvorrichtung. Eine Abstandsmessvorrichtung, wie beispielsweise eine Sonareinrichtung oder eine Laserabstandsmessvorrichtung, die nach dem Laufzeitmessungsprinzip arbeitet, ermöglicht somit also den Einsatz von einer einzelnen Kamera und gleichzeitig die präzise Abstands- bzw. Entfernungsmessung zu einem mit der Kamera detektierten Objekt mittels der Abstandsmessvorrichtung.

Gemäß einer weiteren Ausführungsform umfasst das Windparkflugbefeuerungssystem mindestens einen Empfänger zum Empfangen von Signalen mobiler Sender, insbesondere von Flugfunktranspondern. Demnach ist der mobile Sender beispielsweise ein Flugfunktransponder, der in Flugobjekten angeordnet sein kann und eine Kennung, z. B. eine 24-bit-Kennung, aussendet, mit der das Flugobjekt eindeutig oder zumindest der Typ des Flugobjekts erkannt werden kann. Der Empfänger des Windparkflugbefeuerungssystems empfängt dieses Signal und kann somit ein mit der Sende- und Empfangsstation detektiertes Objekt eindeutig klassifizieren und dessen Flugbahn verfolgen.

Flugobjekte, die ihre Flugbahn beispielsweise kreuzen, können somit eindeutig voneinander unterschieden werden.

Ferner ist eine redundante Erkennung von Flugobjekten im Bereich des Windparks möglich, da einerseits die mittels der Signale der mobilen Transponder und andererseits die mittels der Auswertevorrichtung in den Bereich des Windparks eintretende Flugobjekte erkannt werden können.

Gemäß einem weiteren Aspekt dieses Ausführungsbeispiels werden die Flugbahnen von Flugobjekten, die mittels der Signale von mobilen Sendern sowie auch mittels der Auswertevorrichtung detektiert werden, über vorbestimmte Zeiträume, z. B. ein Jahr oder sechs Monate, gespeichert.

Die gespeicherten Daten können bei einem Wartungsintervall des Windparkflugbefeuerungssystems abgerufen werden und dienen dann zur Verifikation der korrekten Funktion des Windparkflugbefeuerungssystems. Hierzu werden beispielsweise die für das gleiche Flugobjekt auf die verschiedenen Weisen zu gleichen Zeitpunkten detektierten Positionen verglichen. Bei Übereinstimmung ist von einem korrekt funktionierenden Windparkflugbefeuerungssystems auszugehen, während bei einer nicht vorhandenen Übereinstimmung auf eine Fehlfunktion zu schließen ist.

Gemäß einer weiteren Ausführungsform ist in der Schalteinrichtung für den Windpark ein Sektor definierbar. Dieser Sektor entspricht insbesondere dem zuvor genannten Bereich des Windparks. Die Schalteinrichtung ist dann eingerichtet, um mindestens eine, mehrere oder alle Flugbefeuerungseinrichtungen einzuschalten oder eingeschaltet zu lassen, wenn mittels der Auswerteeinrichtung ein oder mehrere Flugobjektpositionen detektiert werden, die innerhalb des vordefinierten Sektors um den Windpark liegen.

Gemäß einer weiteren Ausführungsform ist die Schalteinrichtung ferner eingerichtet, mindestens eine der Flugbefeuerungseinrichtungen auszuschalten oder ausgeschaltet zu lassen, wenn mittels der Auswerteeinrichtung keine Flugobjektpositionen, also keine Flugobjekte mit Positionen detektiert werden, die innerhalb des vordefinierten Sektors um den Windpark liegen.

Demnach wird durch das Definieren eines Sektors ein Bereich um den Windpark festgelegt, der z. B. gemäß gesetzlicher Vorgaben oder Richtlinien als Bereich definiert ist, innerhalb dem der Aufenthalt eines Flugobjekts zum Einschalten von Flugbefeuerungen von Windenergieanlagen führen muss. Der Sektor entspricht einem dreidimensionalen Raum oder Bereich, der z. B. durch x-, y- und z-Koordinaten in der Schalteinrichtung definiert ist.

Ein derartiger Sektor umfasst demnach z. B. einen Bereich oder Raum, dessen Unterseite durch den Erdboden, auf dem die Windenergieanlagen des Windparks installiert sind, definiert ist. Die Oberseite des Sektors wird durch eine Fläche gebildet, die in ihrer Gesamtheit mindestens mehrere hundert Meter über der Unterseite, z. B. 600 Meter über der Unterseite, liegt. Die Seitenflächen des Sektors sind ferner so definiert, dass jede der Seitenflächen mindestens einige Kilometer, insbesondere vier Kilometer, von einer durch die außenliegenden Windenergieanlagen definierten Kontur des Windparks in horizontaler Richtung entfernt liegen.

Demnach wird durch die Seitenflächen zusammen mit der Oberseite und Unterseite des Sektors ein dreidimensionaler Raum oder Bereich definiert, deren horizontale Ausbreitung um den gesamten Windpark mit einem Abstand von mindestens mehreren Kilometern, insbesondere vier Kilometer, zu den außenliegenden Windenergieanlagen des Windparks verläuft.

Treten Flugzeuge also in diesen Bereich, also den definierten Sektor um den Windpark, ein, so werden die Flugbefeuerungseinrichtungen eingeschaltet, um das Flugobjekt zu warnen. Sind keine Flugobjekte mehr im Bereich, also dem definierten Sektor, so werden die Flugbefeuerungseinrichtungen ausgeschaltet. Ein rechtzeitiges Warnen von Flugobjekten ist somit gewährleistet, während zusätzlich Energiekosten gespart werden.

Gemäß einer weiteren Ausführungsform weist jede Windenergieanlage des Windparks jeweils genau eine Flugbefeuerungseinrichtung auf, die insbesondere zwei Leuchten, die vorzugsweise jeweils um 360 Grad in der Horizontalen abstrahlen, umfasst. Demnach kann ein Flugobjekt vorteilhafterweise jede einzelne Windenergieanlage bei schlechter Sicht erkennen und die Flugbahn entsprechend anpassen.

Gemäß einer weiteren Ausführungsform sind in der Schalteinrichtung mehrere Teilsektoren jeweils für eine oder mehrere Windenergieanlagen des Windparks definierbar. Insbesondere ist in der Schalteinrichtung für jede Windenergieanlage ein eigener Teilsektor definierbar. Jeder Teilsektor entspricht einem dreidimensionalen Raum oder Bereich, der z. B. durch x-, y- und z-Koordinaten in der Schalteinrichtung definiert ist.

Hierfür umfasst dann jeder Teilsektor z. B. einen Bereich oder Raum, dessen Unterseite durch den Erdboden definiert ist, auf dem die dem jeweiligen Teilsektor zugeordnete Windenergieanlage oder die dem jeweiligen Teilsektor zugeordneten Windenergieanlagen installiert sind. Die Oberseite jedes Teilsektors wird jeweils durch eine Fläche gebildet, die in ihrer Gesamtheit mindestens mehrere hundert Meter über der Unterseite des jeweiligen Teilsektors, z. B. 600 Meter über der Unterseite, liegt. Die Seitenflächen jedes Teilsektors sind so definiert, dass diese mindestens einige Kilometer, insbesondere vier Kilometer, von der oder jeder der dem jeweiligen Teilsektor zugeordneten Windenergieanlage oder Windenergieanlagen in horizontaler Richtung entfernt liegen. Demnach entspricht jeder Teilsektor einem dreidimensionalen Raum, wobei sich die Teilsektoren natürlich auch überschneiden können.

Ferner ist die Schalteinrichtung eingerichtet, die Flugbefeuerungseinrichtung der Windenergieanlage oder Windenergieanlagen einzuschalten oder eingeschaltet zu lassen, wenn mittels der Auswerteeinrichtung ein oder mehrere Flugobjektpositionen detektiert werden, die innerhalb des für die jeweilige Windenergieanlage oder Windenergieanlagen definierten Teilsektors liegen.

Gemäß einer weiteren Ausführungsform ist die Schalteinrichtung außerdem eingerichtet, die Flugbefeuerungseinrichtung der Windenergieanlage oder Windenergieanlagen auszuschalten oder ausgeschaltet zu lassen, wenn mittels der Auswerteeinrichtung keine Flugobjektpositionen detektiert werden, die innerhalb des für die jeweilige Windenergieanlage oder Windenergieanlagen definierten Teilsektors liegen.

Somit ist ein selektives Ein- und Abschalten der Flugbefeuerungseinrichtungen der Windenergieanlagen möglich. Dies ist besonders vorteilhaft bei sehr großen Windparks, die z. B. eine Ausbreitungsrichtung von mehreren Kilometern aufweisen. Bei derartigen Windparks gilt es daher nur die Flugbefeuerungseinrichtungen der Windenergieanlagen einzuschalten, wenn ein Flugobjekt in die Teilsektoren der jeweiligen Windenergieanlagen eintritt.

Es ist also möglich, in einem Windpark, der z. B. von West nach Ost eine Ausbreitung von 10 Kilometern aufweist und dem sich im Bereich der westlichen Grenze des Windparks ein Flugobjekt nähert, zunächst nur die westlich liegenden Windenergieanlagen, die z. B. einen Abstand von etwa 4 bis 5 Kilometern zum Flugobjekt aufweisen, einzuschalten. Die weiter östlich liegenden Flugbefeuerungseinrichtungen können zunächst abgeschaltet bleiben, so dass Energie für den Betrieb dieser Flugbefeuerungseinrichtungen eingespart wird.

Gemäß einer weiteren Ausführungsform ist in der Schalteinrichtung eine Topologie von Objekten und Geodaten hinterlegbar. Vorzugsweise ist die Topologie von Objekten und Geodaten des definierten Sektors und/oder der definierten Teilsektoren des Windparks hinterlegbar.

Ferner ist die Auswerteeinrichtung zum Detektieren von Objektpositionen und Geodaten durch Auswertung der mit der Kamera aufgenommenen Bilder oder Kameradaten und zum Übergeben der detektierten Objektpositionen und Geodaten an die Schalteinrichtung eingerichtet. Außerdem ist die Schalteinrichtung eingerichtet, durch Betrachtung der zeitlichen Veränderung der übergebenen Daten oder insbesondere durch Kennzeichnung der sich nicht zeitlich verändernden Daten eine Topologie von Objekten und Geodaten, insbesondere eines definierten Sektors und/oder definierter Teilsektoren des Windparks, zu erzeugen. Diese Objekte und Geodaten sind demnach keine Flugobjekte, deren Position sich natürlich über die Zeit betrachtet verändern würde.

Demnach werden Topologiedaten in der Schalteinrichtung hinterlegt, mit denen dann vor dem Ein- oder Abschalten der Flugbefeuerung verifiziert werden kann, ob es sich bei dem von der Auswerteeinrichtung detektierten Flugobjekt tatsächlich um ein Flugobjekt handelt. Zum Beispiel sind aus den Topologiedaten Straßen- oder Autobahnverläufe entnehmbar und somit sich bewegende Objekte im Bereich der Straßen- oder Autobahnverläufe eindeutig als Objekte, die tatsächlich keine Flugobjekte sind, verifizierbar.

Ferner dienen die Topologiedaten zur Verifikation des Windparkflugbefeuerungssystems selbst. Gemäß einer Ausführungsform ist es möglich zu prüfen oder zu verifizieren, ob das Windparkflugbefeuerungssystem einwandfrei funktioniert, indem die mit der Auswerteeinrichtung detektierten Topologiedaten mit hinterlegten Topologiedaten übereinstimmen. Hierdurch können auch z. B. Nebel, Hagel oder Blitze detektiert werden, indem z. B. festgestellt wird, dass die detektierten Topologiedaten nicht mit hinterlegten Topologiedaten übereinstimmen.

Gemäß einer weiteren Ausführungsform ist die Schalteinrichtung eingerichtet, zum Aussachalten der mindestens einen Flugbefeuerungseinrichtung zyklisch ein Datensignal, insbesondere ein Flag in einem Rundrufsignal, an die Flugbefeuerungseinrichtung zu übertragen.

Demnach wird kein Ein-/Ausschaltsignal an die Flugbefeuerungseinrichtungen geschickt, sondern ein zyklisches "Befeuerung unterdrücken"-Signal. Zyklisch bedeutet, dass das Signal in einem festen oder variablen Intervall wiederholt geschickt wird. Dieses Signal kann in Form eines Flags, vorzugsweise als Rundruf, an alle zu befeuernden Anlagen geschickt werden, wobei das Flag einen normalen Betrieb der Befeuerung unterdrückt (Befeuerung aus). Über das Flag lässt sich somit auch bei Bedarf die Befeuerung einschalten, wobei hierzu das Unterdrücken aufgehoben wird und somit situationsbedingt der Betrieb, also eine eingeschaltete Flugbefeuerungseinrichtung, durchgeführt wird.

Vorteil hierbei ist, dass im Störfall (Ausbleiben des Flags) auf einen autarken Betrieb, bei der die Flugbefeuerungseinrichtung eingeschaltet ist, umgestellt wird und somit ein sicherer Betrieb der Befeuerung gewährleistet ist.

Ferner betrifft die Erfindung einen Windpark mit einem Windparkflugbefeuerungssystem nach einer der vorhergehenden Ausführungsformen.

Außerdem betrifft die Erfindung ein Verfahren zur Befeuerung, also zur Flugbefeuerung, eines Windparks. Gemäß dem Verfahren werden elektromagnetische Wellen und/oder Schallwellen mit einer Sendestation ausgesendet. Ferner werden elektromagnetische Wellen und/oder Schallwellen mit mindestens einer Empfangsstation und/oder der Sendestation empfangen und Positionen von Flugobjekten, also Flugobjektpositionen, durch Auswertung der ausgesendeten und/oder empfangenen elektromagnetischen Wellen und/oder Schallwellen mit einer Auswerteeinrichtung detektiert.

Außerdem wird mindestens eine der Flugbefeuerungseinrichtungen in Abhängigkeit der Positionen der mit der Auswerteeinrichtung detektierten Flugobjektpositionen ein- und/oder ausgeschaltet.

Nachfolgend werden Ausführungsbeispiele der vorliegenden Erfindung exemplarisch unter Bezugnahme auf die begleitenden Figuren näher erläutert. Es zeigen
- Fig. 1: eine Windenergieanlage,
- Fig. 2: einen Windpark mit einem Ausführungsbeispiel eines Windparkflugbefeuerungssystems und
- Fig. 3: eine Gondel einer Windenergieanlage mit einer Kamera.

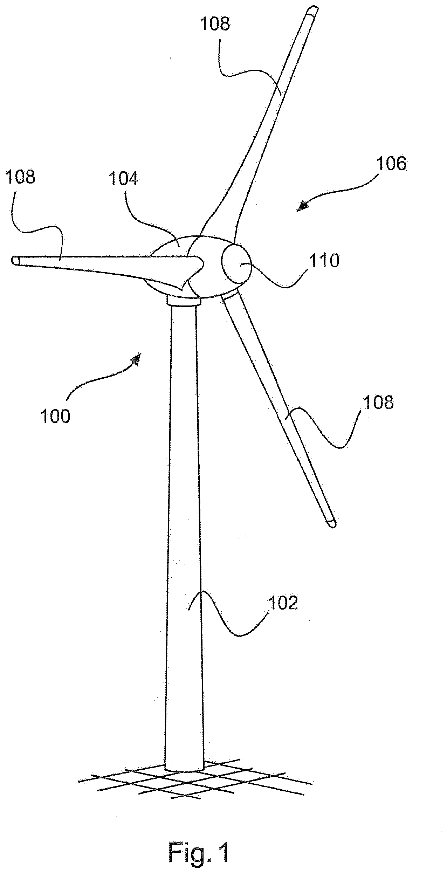

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

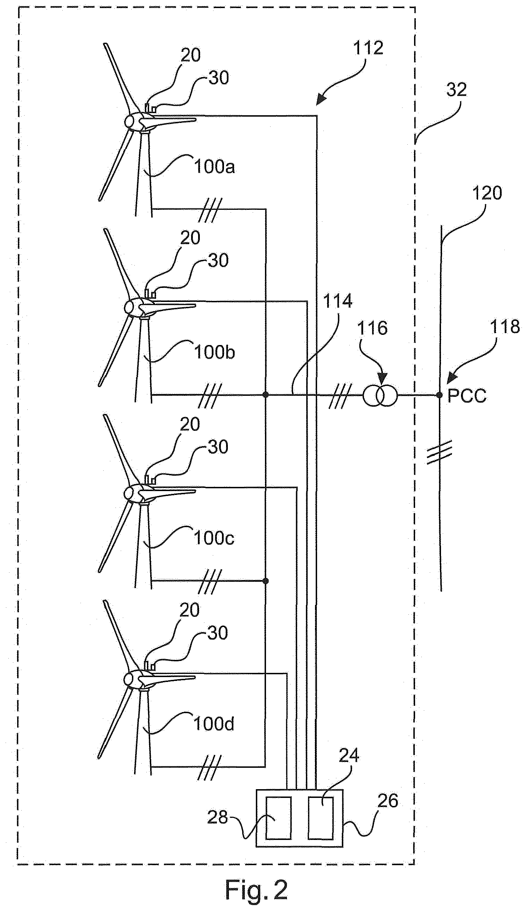

Die Windenergieanlage 100 aus Fig. 1 kann auch im Zusammenschluss mit mehreren weiteren Windenergieanlagen 100 in einem Windpark, wie er im Folgenden in Bezug auf Fig. 2 beschrieben wird, betrieben werden.

In Fig. 2 ist ein Windpark 112 mit exemplarisch vier Windenergieanlagen 100a bis 100d dargestellt. Die vier Windenergieanlagen 100a bis 100d können gleich oder verschieden sein. Die Windenergieanlagen 100a bis 100d stehen somit repräsentativ für im Grunde eine beliebige Anzahl von Windenergieanlagen 100 eines Windparks 112. Die Windenergieanlagen 100 stellen ihre Leistung, nämlich insbesondere den erzeugten Strom, über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen.

Fig. 2 ist nur eine vereinfachte Darstellung eines Windparks 112, die beispielsweise keine Leistungssteuerung zeigt, obwohl natürlich eine Leistungssteuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

Ferner ist ein Ausführungsbeispiel des Windparkflugbefeuerungssystems dargestellt. Im Einzelnen weisen die Windenergieanlagen 100a bis 100d jeweils eine Kamera 20 auf.

Mit den Kameras 20, die hier Infrarotkameras sind, werden Bilder, nämlich Wärmebilder, aufgenommen und die aufgenommenen Bilder in Form von Daten, nämlich Kameradaten, einer Auswerteeinrichtung 24 zugeführt.

In der Auswerteeinrichtung 24 werden Flugobjektpositionen, also die Positionen von Flugobjekten, durch Auswertung der Kameradaten detektiert. Hierzu werden beispielsweise mit einer Bilderarbeitungssoftware automatisch sich bewegende Objekte in den mit den Kameras aufgenommenen Bildern detektiert und die Abstände zu den detektierten Objekten bestimmt. Eine Abstandsbestimmung kann beispielsweise mit einem Laserentfernungsmessgerät erfolgen, das eine Entfernungsmessung nach dem Laufzeitprinzip vornimmt.

Ferner ist eine Schalteinrichtung 28 vorgesehen, die hier exemplarisch ebenfalls Bestandteil der Steuerung 26 ist. Mit der Schalteinrichtung 28 sind Flugbefeuerungseinrichtungen 30, die auf der Gondel 104 jeder Windenergieanlage 100a bis 100d angeordnet sind, an- und abschaltbar. Die Flugbefeuerungseinrichtungen 30 werden demnach in Abhängigkeit der Flugobjektpositionen, die mit der Auswerteeinrichtung 24 bestimmt wurden, ein- oder abgeschaltet.

Zum Ausschalten der Flugbefeuerungseinrichtung wird hierzu ein Datensignal von der Schalteinrichtung 28 zyklisch an die Flugbefeuerungseinrichtung 30 übertragen. Dieses Datensignal entspricht z. B. einem Rundrufsignal an alle Windenergieanlagen. Demnach wird kein Ein-/Ausschaltsignal an die Flugbefeuerungseinrichtungen 30 geschickt, sondern ein zyklisches "Befeuerung unterdrücken"-Signal. Zyklisch bedeutet, dass das Signal in einem festen oder variablen Intervall wiederholt geschickt wird.

Dieses Signal kann in Form eines Flags, vorzugsweise als Rundruf, an alle zu befeuernden Anlagen geschickt werden, wobei das Flag einen normalen Betrieb der Befeuerung unterdrückt (Befeuerung aus). Über das Flag lässt sich somit auch bei Bedarf die Befeuerung einschalten. Im Falle eines Ausbleibens dieses Signals werden die Flugbefeuerungseinrichtungen 30 automatisch angeschaltet.

Ob eine Flugbefeuerungseinrichtung 30 ein- oder abgeschaltet wird, ist abhängig von der genauen Position des Flugobjekts. Hierzu ist ein Sektor 32 in der Schalteinrichtung 28 definiert. Dieser Sektor 32 ist in Fig. 2 exemplarisch zweidimensional dargestellt, wobei dieser üblicherweise dreidimensionale Ausmaße, also z. B. eine Breite, eine Höhe und eine Tiefe, hat, wobei sich die Windenergieanlagen 100a bis 100d im Wesentlichen im Zentrum des Sektors 32 befinden.

Auch ist der Sektor 32 in Fig. 2 sehr nahe an den Windenergieanlagen 100a bis 100d dargestellt, wobei die äußere Begrenzung des Sektors 32 üblicherweise einen Abstand von mehreren Kilometern zu den Windenergieanlagen in zumindest horizontaler Richtung aufweisen kann.

Wird nun mit der Auswerteeinrichtung 24 eine Position eines Flugobjekts, also eine Flugobjektposition, innerhalb dieses Sektors 32 detektiert, so werden gemäß diesem Ausführungsbeispiel die Flugbefeuerungseinrichtungen 30 eingeschaltet oder bleiben eingeschaltet, wenn bereits zuvor ein anderes Flugobjekt im Sektor 32 detektiert wurde.

Im Falle, dass kein Flugobjekt (mehr) im Sektor 32, also keine Flugobjektposition innerhalb des Sektors 32, detektiert wird, werden die Flugbefeuerungseinrichtungen 30 abgeschaltet bzw. bleiben abgeschaltet.

Hier ist ein Sektor 32 dargestellt, der den gesamten Windpark 112 "einrahmt". Gemäß einem anderen hier nicht dargestellten Ausführungsbeispiel ist es jedoch auch möglich, dass für jede Windenergieanlage 100a bis 100d jeweils ein eigener Teilsektor definiert wird, der dann von der Auswerteeinrichtung 24 separat überwacht wird.

Demnach wird die Flugbefeuerung 30 einer Windenergieanlage 100a bis 100d in dem Falle eingeschaltet, wenn ein Flugobjekt in den jeweiligen Teilsektor einer Windenergieanlage 100a bis 100d eintritt bzw. in diesem Teilsektor der Windenergieanlage 100a bis 100d detektiert wird. Somit ist ein selektives Einschalten einzelner Flugbefeuerungseinrichtungen 30 in Abhängigkeit der Flugobjektpositionen möglich. Insbesondere bei großen Windparks, die sich über eine Fläche von mehreren Kilometern erstrecken, können somit Flugbefeuerungseinrichtungen 30 nur in dem Teil des Windparks 112, der tatsächlich eine Gefährdung für ein Flugobjekt darstellen könnte, aktiviert werden.

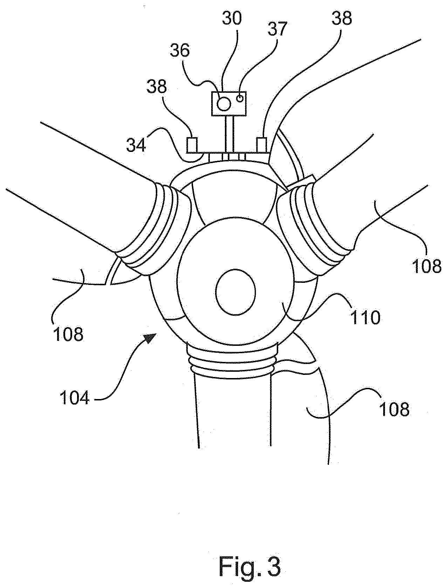

Fig. 3 zeigt die Frontansicht einer Gondel 104 einer Windenergieanlage 100 in vergrößerter Darstellung. Auf der Gondel 104 ist ein Antennenträger 34 angeordnet und fest mit der Gondel 104 verbunden. Der Antennenträger 34 weist eine Kamera 20 auf. Die Kamera 20 umfasst ein Objektiv 36 sowie eine Abstandsmessvorrichtung 37, nämlich eine Laserentfernungsmesseinrichtung. Die Kamera 20 ist horizontal und vertikal schwenkbar.

Gemäß einer weiteren hier nicht dargestellten Ausführungsform ist die Kamera 20 mit einer Optik versehen, die einen 360 Grad Rundumblick ermöglicht. Somit ist in diesem Fall kein Verschwenken der Kamera 20 nötig.

Ferner sind zwei Leuchten 38 vorgesehen, die zusammen eine Flugbefeuerungseinrichtung 30 der Windenergieanlage 100 bilden. Durch die beabstandete Anordnung der Leuchten 38 erfolgt eine Dopplung der Systeme, so dass trotz der teilweisen Verschattung durch die Rotorblätter 108 trotzdem eine fehlerfreie Funktion des Windparkflugbefeuerungssystems gewährleistet wird.

## Patentansprüche

1. Windparkflugbefeuerungssystem, umfassend:
- mindestens eine Flugbefeuerungseinrichtung (30),
- mindestens eine Kamera (20) zum Aufnehmen von Bildern, **gekennzeichnet durch**
- eine Auswerteeinrichtung (24) zum Detektieren von Flugobjektpositionen durch Auswertung der Kameradaten, insbesondere aufgenommener Bilder, und
- mindestens eine Schalteinrichtung (28) zum Ein- oder Ausschalten mindestens einer der Flugbefeuerungseinrichtungen (30) in Abhängigkeit der mit der Auswerteeinrichtung detektierten Flugobjektpositionen.

2. Windparkflugbefeuerungssystem nach Anspruch 1,
wobei das Objektiv (36) der Kamera (20) und die Auswerteeinrichtung (24) derart aufeinander abgestimmt sind, um Flugobjekte, insbesondere unabhängig von deren Größe, die innerhalb eines vordefinierten ersten Abstands zur Kamera positioniert sind, zu erkennen und/oder Flugobjekte, die außerhalb eines vordefinierten zweiten Abstands liegen, nicht zu erkennen.

3. Windparkflugbefeuerungssystem nach Anspruch 1 oder 2,
wobei mindestens eine Kamera (20) eine Infrarotkamera ist, die vorzugsweise horizontal und/oder vertikal schwenkbar und/oder drehbar ist.

4. Windparkflugbefeuerungssystem nach einem der vorhergehenden Ansprüche,
wobei mindestens eine Kamera (20) eine Foto- und/oder Videokamera ist, die vorzugsweise horizontal und/oder vertikal schwenkbar und/oder drehbar ist.

5. Windparkflugbefeuerungssystem nach einem der vorhergehenden Ansprüche,
wobei die Kamera (20) eine stereoskopische Kamera (20) oder eine nach einem Stereoskopieverfahren arbeitende Kamera (20) ist und/oder das Windparkflugbefeuerungssystem mindestens zwei Kameras (20) umfasst.

6. Windparkflugbefeuerungssystem nach einem der vorhergehenden Ansprüche,
wobei das Windparkflugbefeuerungssystem mindestens drei Kameras (20) umfasst, wobei die Kameras beabstandet zueinander oder im Wesentlichen an der selben Position anordenbar sind.

7. Windparkflugbefeuerungssystem nach einem der vorhergehenden Ansprüche,
wobei das Windparkflugbefeuerungssystem mindestens eine Abstandsmessvorrichtung (37), insbesondere mit einer Laufzeitmessung, wie einer Sonareinrichtung und/oder einer Laserentfernungsmessvorrichtung oder Laserabstandsmessvorrichtung, aufweist.

8. Windparkflugbefeuerungssystem nach einem der vorhergehenden Ansprüche,
wobei das Windparkflugbefeuerungssystem mindestens einen Empfänger zum Empfangen von Signalen eines mobilen Senders, insbesondere eines Flugfunktransponders, aufweist.

9. Windparkflugbefeuerungssystem nach einem der vorhergehenden Ansprüche,
wobei in der Schalteinrichtung (28) für den Windpark (112) ein Sektor (32) definierbar ist und die Schalteinrichtung (28) eingerichtet ist, mindestens eine der Flugbefeuerungseinrichtungen (30) einzuschalten oder eingeschaltet zu lassen, wenn mittels der Auswerteeinrichtung (24) eine oder mehrere Flugobjektpositionen detektiert werden, die innerhalb des vordefinierten Sektors (32) um den Windpark (112) liegen.

10. Windparkflugbefeuerungssystem nach einem der vorhergehenden Ansprüche,
wobei in der Schalteinrichtung (28) für den Windpark (112) ein Sektor (32) definierbar ist und die Schalteinrichtung (28) eingerichtet ist, mindestens eine der Flugbefeuerungseinrichtungen (30) auszuschalten oder ausgeschaltet zu lassen, wenn mittels der Auswerteeinrichtung (24) keine Flugobjektpositionen detektiert werden, die innerhalb des vordefinierten Sektors (32) um den Windpark (112) liegen.

11. Windparkflugbefeuerungssystem nach einem der vorhergehenden Ansprüche,
wobei für jede Windenergieanlage (100) des Windparks (112) jeweils genau eine Flugbefeuerungseinrichtung (30) vorgesehen ist.

12. Windparkflugbefeuerungssystem nach einem der vorhergehenden Ansprüche,
wobei in der Schalteinrichtung (28) für mehrere oder jede Windenergieanlage (100) des Windparks (112) jeweils ein Teilsektor definierbar ist und die Schalteinrichtung (28) eingerichtet ist, die Flugbefeuerungseinrichtung (30) der dem jeweiligen Teilsektor zugeordneten Windenergieanlage (100) oder Windenergieanlagen (100) einzuschalten oder eingeschaltet zu lassen, wenn mittels der Auswerteeinrichtung (24) ein oder mehrere Flugobjektpositionen detektiert werden, die innerhalb des für die Windenergieanlagen (100) oder Windenergieanlagen (100) definierten Teilsektors liegen.

13. Windparkflugbefeuerungssystem nach einem der vorhergehenden Ansprüche,
wobei in der Schalteinrichtung (28) für mehrere oder jede Windenergieanlage (100) des Windparks (112) jeweils ein Teilsektor definierbar ist und die Schalteinrichtung (28) eingerichtet ist, die Flugbefeuerungseinrichtung (30) der dem jeweiligen Teilsektor zugeordneten Windenergieanlage (100) oder Windenergieanlagen (100) auszuschalten oder ausgeschaltet zu lassen, wenn mittels der Auswerteeinrichtung (24) keine Flugobjektpositionen detektiert werden, die innerhalb des für die Windenergieanlage (100) oder Windenergieanlagen (100) definierten Teilsektors liegen.

14. Windparkflugbefeuerungssystem nach einem der vorhergehenden Ansprüche,
wobei in der Schalteinrichtung (28) eine Topologie von Objekten und Geodaten, insbesondere eines definierten Sektors und/oder definierter Teilsektoren des Windparks, hinterlegbar ist und/oder
die Auswerteeinrichtung (24) zum Detektieren von Objektpositionen und Geodaten durch Auswertung der Kameradaten, insbesondere aufgenommener Bilder, und zum Übergeben der detektierten Objektpositionen und Geodaten an die Schalteinrichtung (28) eingerichtet ist und die Schalteinrichtung (28) eingerichtet ist, durch Betrachtung oder Kennzeichnung der sich zeitlich nicht verändernden Objektpositionen und Geodaten der übergebenen Daten eine Topologie von Objekten und Geodaten, insbesondere eines definierten Sektors und/oder definierter Teilsektoren des Windparks, zu erzeugen.

15. Windparkflugbefeuerungssystem nach einem der vorhergehenden Ansprüche, wobei die Schalteinrichtung (28) eingerichtet ist, zum Ausschalten der mindestens einen Flugbefeuerungseinrichtung (30) zyklisch ein Datensignal, insbesondere ein Flag in einem Rundrufsignal, an die Flugbefeuerungseinrichtung (30) zu übertragen.

16. Windpark mit einem Windparkflugbefeuerungssystem nach einem der Ansprüche 1 bis 15.

17. Verfahren zur Befeuerung eines Windparks, insbesondere mit einem Windparkflugbefeuerungssystem nach einem der Ansprüche 1 bis 15, mit den Schritten:
- Aufnehmen von Bildern mit mindestens einer Kamera (20)
- Detektieren von Flugobjektpositionen durch Auswertung der Kameradaten, insbesondere aufgenommener Bilder, mit einer Auswerteeinrichtung (24) und
- Ein- oder Ausschalten mindestens einer der Flugbefeuerungseinrichtungen (30) in Abhängigkeit der Positionen der mit der Auswerteeinrichtung (24) detektierten Flugobjektpositionen mit einer Schalteinrichtung (28).

## Claims

1. A wind farm aircraft beacon system, comprising:
- at least one aircraft beacon device (30),
- at least one camera (20) for recording images,
**characterized by**
- an evaluation device (24) for detecting flying object positions by evaluating the camera data, in particular images recorded, and
- at least one switching device (28) for switching on or off at least one of the aircraft beacon devices (30) in dependence on the flying object positions detected by the evaluation device.

2. The wind farm aircraft beacon system as claimed in claim 1,
wherein the lens (36) of the camera (20) and the evaluation device (24) are coordinated in such a way as to sense flying objects, in particular independently of their size, that are positioned within a predefined first distance of the camera and/or not to sense flying objects that lie outside a predefined second distance.

3. The wind farm aircraft beacon system as claimed in claim 1 or 2,
wherein at least one camera (20) is an infrared camera, which is preferably horizontally and/or vertically pivotable and/or rotatable.

4. The wind farm aircraft beacon system as claimed in one of the preceding claims,
wherein at least one camera (20) is a photo and/or video camera, which is preferably horizontally and/or vertically pivotable and/or rotatable.

5. The wind farm aircraft beacon system as claimed in one of the preceding claims,
wherein the camera (20) is a stereoscopic camera (20) or a camera (20) operating on the basis of a stereoscopy process and/or the wind farm aircraft beacon system comprises at least two cameras (20).

6. The wind farm aircraft beacon system as claimed in one of the preceding claims,
wherein the wind farm aircraft beacon system comprises at least three cameras (20), wherein the cameras can be arranged at a distance from one another or essentially at the same position.

7. The wind farm aircraft beacon system as claimed in one of the preceding claims,
wherein the wind farm aircraft beacon system has at least one distance measuring device (37), in particular with a transit-time measurement, such as a sonar device and/or a laser range measuring device or laser distance measuring device.

8. The wind farm aircraft beacon system as claimed in one of the preceding claims,
wherein the wind farm aircraft beacon system has at least one receiver for receiving signals of a mobile transmitter, in particular a radio flight transponder.

9. The wind farm aircraft beacon system as claimed in one of the preceding claims,
wherein a sector (32) can be defined in the switching device (28) for the wind farm (112) and the switching device (28) is designed to switch on, or to have switched on, at least one of the aircraft beacon devices (30) when one or more flying object positions that lie within the predefined sector (32) around the wind farm (112) are detected by means of the evaluation device (24).

10. The wind farm aircraft beacon system as claimed in one of the preceding claims,
wherein a sector (32) can be defined in the switching device (28) for the wind farm (112) and the switching device (28) is designed to switch off, or to have switched off, at least one of the aircraft beacon devices (30) when no flying object positions that lie within the predefined sector (32) around the wind farm (112) are detected by means of the evaluation device (24).

11. The wind farm aircraft beacon system as claimed in one of the preceding claims,
wherein precisely one aircraft beacon device (30) is respectively provided for each wind power installation (100) of the wind farm (112).

12. The wind farm aircraft beacon system as claimed in one of the preceding claims,
wherein a subsector can respectively be defined in the switching device (28) for a plurality or each wind power installation (100) of the wind farm (112), and the switching device (28) is designed to switch on, or to have switched on, the aircraft beacon device (30) of the wind power installation (100) or wind power installations (100) assigned to the respective subsector when one or more flying object positions that lie within the subsector defined for the wind power installations (100) or wind power installations (100) is/are detected by means of the evaluation device (24).

13. The wind farm aircraft beacon system as claimed in one of the preceding claims,
wherein a subsector can respectively be defined in the switching device (28) for a plurality or each wind power installation (100) of the wind farm (112), and the switching device (28) is designed to switch off, or to have switched off, the aircraft beacon device (30) of the wind power installation (100) or wind power installations (100) assigned to the respective subsector when no flying object positions that lie within the subsector defined for the wind power installation (100) or wind power installations (100) are detected by means of the evaluation device (24).

14. The wind farm aircraft beacon system as claimed in one of the preceding claims,
wherein a topology of objects and geodata, in particular of a defined sector and/or of defined subsectors of the wind farm, can be stored in the switching device (28) and/or
the evaluation device (24) is designed for detecting object positions and geodata by evaluating the camera data, in particular images recorded, and for transferring the detected object positions and geodata to the switching device (28), and the switching device (28) is designed for generating a topology of objects and geodata, in particular of a defined sector and/or of defined subsectors of the wind farm, by observing or tagging the time-invariant object positions and geodata of the data transferred.

15. The wind farm aircraft beacon system as claimed in one of the preceding claims, wherein, for switching off the at least one aircraft beacon device (30), the switching device (28) is designed to transmit a data signal, in particular a flag in a broadcasting signal, cyclically to the aircraft beacon device (30).

16. A wind farm with a wind farm aircraft beacon system as claimed in one of claims 1 to 15.

17. A method for beaconing a wind farm, in particular with a wind farm aircraft beacon system as claimed in one of claims 1 to 15, with the steps of:
- recording images with at least one camera (20)
- detecting flying object positions by evaluating the camera data, in particular images recorded, with an evaluation device (24) and
- switching on or off at least one of the aircraft beacon devices (30) in dependence on the positions of the flying object positions detected by the evaluation device (24) with a switching device (28).

## Revendications

1. Système de feux de balisage aérien de parc éolien, comprenant :
- au moins un dispositif de feux de balisage aérien (30),
- au moins une caméra (20) pour la prise d'images, **caractérisé par**
- un dispositif d'évaluation (24) pour la détection de positions d'objet volant par évaluation des données de caméra, en particulier des images prises, et
- au moins un dispositif de commutation (28) pour l'activation ou la désactivation d'au moins un des dispositifs de feux de balisage aérien (30) en fonction des positions d'objet volant détectées avec le dispositif d'évaluation.

2. Système de feux de balisage aérien de parc éolien selon la revendication 1,
dans lequel l'objectif (36) de la caméra (20) et le dispositif d'évaluation (24) sont adaptés l'un à l'autre de manière à détecter des objets volants, en particulier indépendamment de leur grandeur, qui sont positionnés dans une première distance prédéfinie de la caméra et/ou à ne pas détecter des objets volants qui se trouvent en dehors d'une seconde distance prédéfinie.

3. Système de feux de balisage aérien de parc éolien selon la revendication 1 ou 2,
dans lequel au moins une caméra (20) est une caméra à infrarouge qui est pivotante et/ou rotative de préférence horizontalement et/ou verticalement.

4. Système de feux de balisage aérien de parc éolien selon l'une des revendications précédentes,
dans lequel au moins une caméra (20) est une caméra photo et/ou vidéo qui est pivotante et/ou rotative de préférence horizontalement et/ou verticalement.

5. Système de feux de balisage aérien de parc éolien selon l'une des revendications précédentes,
dans lequel la caméra (20) est une caméra stéréoscopique (20) ou une caméra (20) travaillant selon un procédé de stéréoscopie et/ou le système de feux de balisage aérien de parc éolien comporte au moins deux caméras (20).

6. Système de feux de balisage aérien de parc éolien selon l'une des revendications précédentes,
dans lequel le système de feux de balisage aérien de parc éolien comporte au moins trois caméras (20), dans lequel les caméras peuvent être agencées à distance les unes des autres ou sensiblement dans la même position.

7. Système de feux de balisage aérien de parc éolien selon l'une des revendications précédentes,
dans lequel le système de feux de balisage aérien de parc éolien présente au moins un dispositif de mesure de distance (37), en particulier avec une mesure du temps de parcours, tel qu'un dispositif de sonar et/ou un dispositif de mesure d'éloignement au laser ou un dispositif de mesure de distance au laser.

8. Système de feux de balisage aérien de parc éolien selon l'une des revendications précédentes,
dans lequel le système de feux de balisage aérien de parc éolien présente au moins un récepteur pour la réception de signaux d'un émetteur mobile, en particulier un transpondeur mobile aéronautique.

9. Système de feux de balisage aérien de parc éolien selon l'une des revendications précédentes,
dans lequel, dans le dispositif de commutation (28) pour le parc éolien (112), un secteur (32) peut être défini et le dispositif de commutation (28) est aménagé afin d'activer ou de faire activer au moins un des dispositifs de feux de balisage aérien (30) lorsqu'au moyen du dispositif d'évaluation (24) une ou plusieurs positions d'objet volant sont détectées, lesquelles se trouvent dans le secteur prédéfini (32) autour du parc éolien (112).

10. Système de feux de balisage aérien de parc éolien selon l'une des revendications précédentes,
dans lequel, dans le dispositif de commutation (28) pour le parc éolien (112), un secteur (32) peut être défini et le dispositif de commutation (28) est aménagé afin de désactiver ou de faire désactiver au moins un des dispositifs de feux de balisage aérien (30) lorsqu'au moyen du dispositif d'évaluation (24) aucune position d'objet volant n'est détectée, qui se trouve dans le secteur prédéfini (32) autour du parc éolien (112).

11. Système de feux de balisage aérien de parc éolien selon l'une des revendications précédentes,
dans lequel pour chaque éolienne (100) du parc éolien (112) respectivement précisément un dispositif de feux de balisage aérien (30) est prévu.

12. Système de feux de balisage aérien de parc éolien selon l'une des revendications précédentes,
dans lequel, dans le dispositif de commutation (28) pour plusieurs ou chaque éolienne (100) du parc éolien (112), respectivement un secteur partiel peut être défini et le dispositif de commutation (28) est aménagé afin d'activer ou de faire activer le dispositif de feux de balisage aérien (30) de l'éolienne (100) ou des éoliennes (100) associée(s) au secteur partiel respectif lorsqu'au moyen du dispositif d'évaluation (24) une ou plusieurs positions d'objet volant sont détectées, lesquelles se trouvent dans le secteur partiel défini pour l'éolienne (100) ou les éoliennes (100).

13. Système de feux de balisage aérien de parc éolien selon l'une des revendications précédentes,
dans lequel, dans le dispositif de commutation (28) pour plusieurs ou chaque éolienne (100) du parc éolien (112), respectivement un secteur partiel peut être défini et le dispositif de commutation (28) est aménagé afin de désactiver ou de faire désactiver le dispositif de feux de balisage aérien (30) de l'éolienne (100) ou des éoliennes (100) associée(s) au secteur partiel respectif lorsqu'au moyen du dispositif d'évaluation (24) aucune position d'objet volant n'est détectée, qui se trouve dans le secteur partiel défini pour l'éolienne (100) ou les éoliennes (100).

14. Système de feux de balisage aérien de parc éolien selon l'une des revendications précédentes,
dans lequel, dans le dispositif de commutation (28), une topologie d'objets et de données géographiques, en particulier d'un secteur défini et/ou de secteurs partiels définis du parc éolien, peut être enregistrée et/ou
le dispositif d'évaluation (24) est aménagé pour la détection de positions d'objet et de données géographiques par évaluation des données de caméra, en particulier des images prises, et pour la transmission des positions d'objet et des données géographiques détectées au dispositif de commutation (28) et le dispositif de commutation (28) est aménagé afin de générer, par observation ou caractérisation des positions d'objet et des données géographiques ne se modifiant pas temporellement des données transmises, une topologie d'objets et de données géographiques, en particulier d'un secteur défini et/ou de secteurs partiels définis du parc éolien.

15. Système de feux de balisage aérien de parc éolien selon l'une des revendications précédentes,
dans lequel le dispositif de commutation (28) est aménagé afin de transmettre pour la désactivation d'au moins un dispositif de feux de balisage aérien (30) de manière cyclique un signal de données, en particulier un drapeau dans un signal de diffusion, au dispositif de feux de balisage aérien (30).

16. Parc éolien avec un système de feux de balisage aérien de parc éolien selon l'une des revendications précédentes 1 à 15.

17. Procédé de balisage d'un parc éolien, en particulier avec un système de feux de balisage aérien de parc éolien selon l'une des revendications 1 à 15, avec les étapes :
- de prise d'images avec au moins une caméra (20),
- de détection de positions d'objet volant par évaluation des données de caméra, en particulier des images prises, avec un dispositif d'évaluation (24) et
- d'activation ou de désactivation d'au moins un des dispositifs de feux de balisage aérien (30) en fonction des positions des positions d'objet volant détectées avec le dispositif d'évaluation (24) avec un dispositif de commutation (28).
